(19) Europäisches Patentamt
European Patent Office
Office européen des brevets

(11) EP 4 317 651 A1

(12) EUROPEAN PATENT APPLICATION

(43) Date of publication:
07.02.2024 Bulletin 2024/06

(21) Application number: 23217337.7

(22) Date of filing: 16.11.2017

(51) International Patent Classification (IPC):
F01D 5/18 (2006.01)          F01D 9/02 (2006.01)
F01D 9/06 (2006.01)          F02K 1/82 (2006.01)
F23R 3/00 (2006.01)

(52) Cooperative Patent Classification (CPC):
F01D 5/186; F01D 9/023; F01D 9/065; F02K 1/822;
F23R 3/002; F05D 2240/11; F05D 2240/81;
F05D 2260/202; F23R 2900/03042; Y02T 50/60

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: 16.11.2016  US 201662422666 P
15.06.2017  US 201715624157

(62) Document number(s) of the earlier application(s) in
accordance with Art. 76 EPC:
17202171.9 / 3 323 989

(71) Applicant: RTX Corporation
Farmington, CT 06032 (US)

(72) Inventor: LEWIS, Scott D.
Vernon, 06066 (US)

(74) Representative: Dehns
St. Bride's House
10 Salisbury Square
London EC4Y 8JD (GB)

Remarks:
This application was filed on 15.12.2023 as a
divisional application to the application mentioned
under INID code 62.

(54) COMPONENT FOR A GAS TURBINE ENGINE, CORRESPONDING GAS TURBINE ENGINE AND METHOD OF FABRICATING

(57) A component (62) of a gas turbine engine includes a cooling hole (68) extending from a first side (72) to a second side (70) that includes an inlet portion (74) disposed about an axis (76) that defines an inlet area (80) through a first surface. The cooling hole (68) further includes a diffuser portion (86) in communication with the inlet portion (74). The diffuser portion (86) defines an exit area (88) and an area ratio of the exit area (88) to the inlet area (80) is provided that provides improved cooling efficiencies.

FIG.3

## Description

## BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. Temperatures in the combustor and turbine sections are extreme and challenge material capabilities. Coatings and cooling air are utilized to improve high temperature performance and wear.

Cooling air is provided in the structures that are within the exhaust gas flow path. These structures may include portions of the combustor section, turbine blades, vanes and outer air seals. Cooling is provided to locations within these hot sections of the engine by film cooling holes. Cooling air is typically tapped from other locations in the engine and therefore is a factor when considering engine overall efficiency. Accordingly, film cooling hole structures that communicate cooling air along the surfaces of the parts in the hot section play a role in increasing overall engine efficiency.

Turbine engine manufacturers continue to seek further improvements to engine performance including improvements to thermal, transfer and propulsive efficiencies.

## SUMMARY

In a featured embodiment, a component of a gas turbine engine includes a first side and a second side. A cooling hole extends through the first side to the second side. The cooling hole includes an inlet portion disposed about an axis. The inlet portion includes an area defining an inlet area through a first surface, and a diffuser portion in communication with the inlet portion. The diffuser portion defines an exit area through a second surface. An area ratio of the exit area to the inlet area is between 2.5 and 8.

In another embodiment according to the previous embodiment, the diffuser portion includes a forward expansion angle and a lateral expansion angle relative to the axis and each of the forward expansion angle and the lateral expansion angle are between 7° and 14°.

In another embodiment according to any of the previous embodiments, each of the forward expansion angle and the lateral expansion angle are the same.

In another embodiment according to any of the previous embodiments, the angle is disposed at a surface angle relative to the second surface and the surface angle is between 15° and 45°.

In another embodiment according to any of the previous embodiments, a ratio of a mass flux ratio between cooling air flow through the cooling hole and a mainstream gas flow defines a blowing ratio and a ratio of the blowing ratio to the area ratio is between 0.2 and 1.3.

In another embodiment according to any of the previous embodiments, the inlet portion includes a meter length having a diameter, the meter length greater than 1.5 times the diameter.

In another embodiment according to any of the previous embodiments, the diffuser portion includes a first lobe and a second lobe disposed on either side of the axis.

In another embodiment according to any of the previous embodiments, includes a center portion between the first lobe and the second lobe. The center portion defines a curved transition between the first lobe and the second lobe.

In another embodiment according to any of the previous embodiments, includes a center portion between the first lobe and the second lobe, the center portion defining a peak.

In another embodiment according to any of the previous embodiments, includes a third lobe between the first lobe and the second lobe.

In another embodiment according to any of the previous embodiments, the third lobe is smaller than either one of the first lobe and the second lobe.

In another embodiment according to any of the previous embodiments, the gas turbine engine includes a compressor section disposed about an axis. A combustor in fluid communication with the compressor section and a turbine section in fluid communication with the combustor. The component is disposed within one of the combustor and turbine sections.

In another featured embodiment, a method of fabricating a component of gas turbine engine includes forming a first side and a second side. A cooling hole is formed extending from the first side to the second side to include an inlet portion disposed about an axis and an area defining an inlet area through the first side. A diffuser portion is formed in communication with the inlet portion to define an exit area through the second side to provide an area ratio of the exit area to the inlet area between 2.5 and 8.

In another embodiment according to any of the previous embodiments, includes forming the diffuser portion to include a forward expansion angle and a lateral expansion angle relative to the axis and each of the forward expansion angle and the lateral expansion angle are between 7° and 14°.

In another embodiment according to any of the previous embodiments, includes forming the cooling hole such that a ratio of a blowing ratio to the area ratio is between 0.2 and 1.3.

In another embodiment according to any of the previous embodiments, includes forming the inlet portion to include a meter portion having a diameter, with the meter portion having a length greater than 1.5 times the diameter.

In another embodiment according to any of the previous embodiments, includes forming the diffuser portion to include a first lobe and a second lobe disposed on either side of the axis.

In another embodiment according to any of the previous embodiments, includes forming the diffuser portion to include a center portion between the first lobe and the second lobe, wherein the center portion defines a peak.

In another embodiment according to any of the previous embodiments, includes a third lobe between the first lobe and the second lobe.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

## BRIEF DESCRIPTION OF THE DRAWINGS

Figure 1 is a schematic view of an example gas turbine engine.

Figure 2 is a schematic view of a component of the gas turbine engine.

Figure 3 is a cross-section of an example cooling hole embodiment.

Figure 4 is a perspective view of the example cooling hole.

Figure 5 is a schematic view of the example cooling hole.

Figure 6A is a side view of an example cooling hole embodiment.

Figure 6B is a schematic side view illustrating a lateral expansion angle of the example cooling hole embodiment of Figure 6B.

Figure 7A is a side view of an example cooling hole embodiment.

Figure 7B is a schematic side view illustrating an example lateral expansion angle of the example cooling hole embodiment of Figure 7A.

Figure 8A is a side view of an example cooling hole embodiment.

Figure 8B is a schematic side view illustrating an example lateral expansion angle of the example cooling hole embodiment of Figure 8A.

Figure 9 is a schematic view of an example diffuser portion embodiment.

Figure 10 is a view of the example diffuser portion shown in Figure 9.

Figure 11 is a schematic view of another example diffuser portion embodiment.

Figure 12 is a perspective view of the example diffuser portion embodiment shown in Figure 11.

Figure 13 is a schematic view of another example diffuser portion embodiment.

Figure 14 is a perspective view of the example diffuser portion embodiment shown in Figure 13.

## DETAILED DESCRIPTION

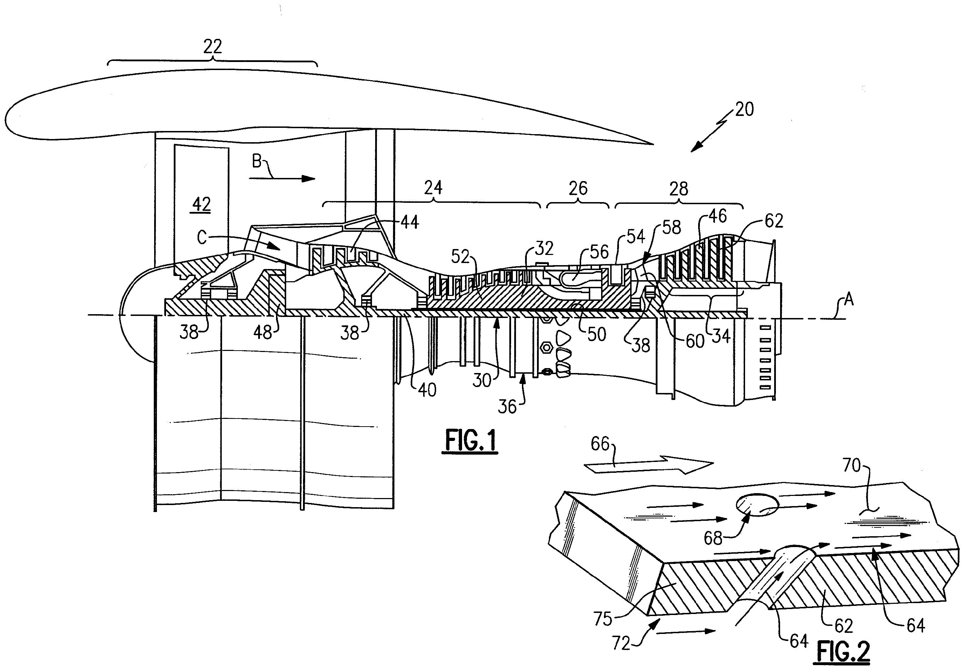

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10.67 km). The flight condition of 0.8 Mach and 35,000 ft (10.67 km), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^0.5(where °R = K x 9/5). The "Low corrected fan tip speed" as disclosed herein according to one non-limiting embodiment is less than about 1150 ft/second (350 m/second).

The example gas turbine engine includes the fan 42 that comprises in one non-limiting embodiment less than about twenty-six fan blades. In another non-limiting embodiment, the fan section 22 includes less than about twenty fan blades. Moreover, in one disclosed embodiment the low pressure turbine 46 includes no more than about six turbine rotors schematically indicated at 34. In another non-limiting example embodiment the low pressure turbine 46 includes about three turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

Referring to Figure 2, with continued reference to Figure 1, the hot sections of the engine 20 including the combustor section 26 the turbine section 34 operate at temperatures that challenge the limits of materials. For this reason coatings and cooling air are utilized to improve performance and extend part operational life.

Cooling air is drawn from cooler parts of the engine 20 and communicated to the hot sections to generate a film of cooling air 64 along an exposed surface 70 of parts exposed to the hot exhaust gas flow schematically shown at 66. Cooling air 64 is injected through film cooling holes 68 disposed along the surface of component 62 within the hot sections. The example component 62 may be a blade, vane, outer air seal or any other component that defines a portion of the gas flow path. In this example a component schematically indicated at 62 includes the film cooling holes 68 that inject cooling air 64 communicated from a cold side 72 along the exposed surface 70 of the component 62. The film cooling air 64 insulates the component 62 from the extreme temperatures.

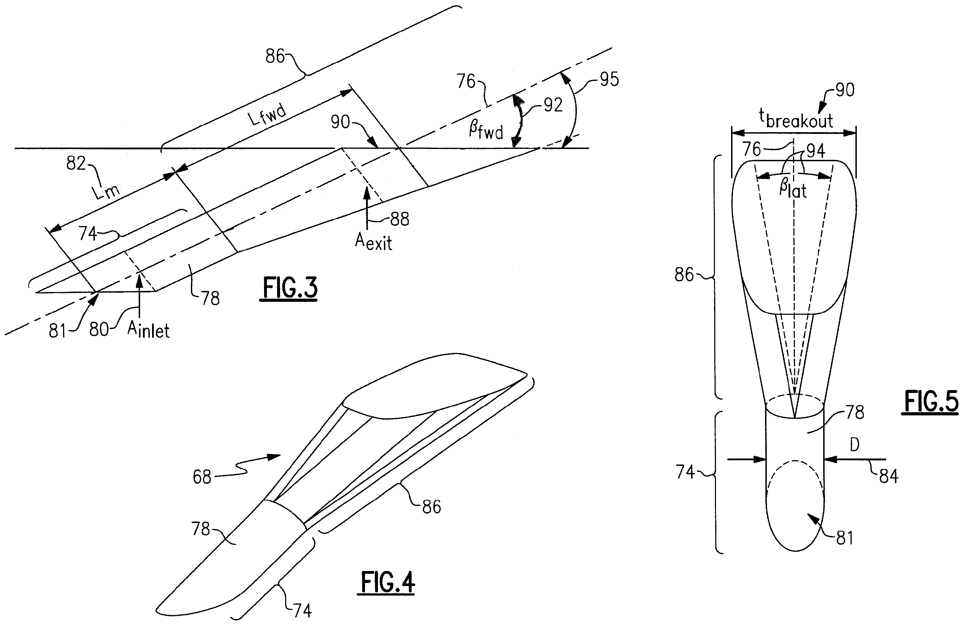

Referring to Figures 3, 4 and 5 with continued reference to Figure 2, a film cooling hole 68 is illustrated separate from the component 62. Figure 4 is solid representation of the open space defined by the cooling hole 68 through the component wall 75 (Figure 2). The cooling hole 68 includes an inlet portion 74 disposed about a longitudinal axis 76. The inlet portion 74 includes a meter portion 78 and an inlet 81. The meter portion 78 includes a length 82 and a diameter 84 disposed about the longitudinal axis 76. The inlet 81 defines a cross-sectional inlet area 80 that is in a plane transverse (i.e. perpendicular) to the axis 76 at the inner edge of the inlet 81 in the inner or cold side 72 surface. In one disclosed embodiment the length 82 is greater than about 1.5 times the diameter 84. In another example embodiment the length 82 is greater than about 1.75 times the diameter 84. In yet another example embodiment the length 82 is greater than about 2.0 times the diameter 84.

The inlet portion 74 is in communication with a diffuser portion 86. The diffuser portion 86 opens to the hot exposed side 70 of the component 62 and provides an increased area for cooling airflow proximate the exposed side 70. The diffuser portion 86 expands in more than one direction away from the longitudinal axis 76 to provide an increased flow area for cooling flow. The diffuser portion 86 defines a cross-sectional exit area 88 that is in a plane transverse (i.e. perpendicular) to the axis 76 at the edge of a breakout opening 90 through the exposed side 70. The larger flow area in the diffuser portion 86 diffuses the cooling air flow as it is injected into the exhaust gas flow 66. The diffused cooling air reduces momentum of the jet of cooling air causing the cooling air to flow more along the exposed surface 70 rather than being injected into the main exhaust gas flow 66.

The better the cooling air flow is directed along the exposed surface 70, the better cooling performance that can be obtained for a given quantity of cooling air. A relationship between the inlet area 80 and the exit area 88 is an indication of cooling performance provided by a cooling hole configuration. The Area Ratio (AR) is the ratio of the exit area 88 to the inlet area 80. A higher AR provides lower momentum of cooling air through the breakout opening 90 and therefore provide better performance. In one disclosed embodiment the AR is between 2.5 and 8. In another example embodiment the AR is between 3 and 8. In yet another example embodiment the AR is between 5 and 8.

The diffuser portion 86 expands in at least two directions away from the longitudinal axis 76. A shape and size of the diffuser portion 86 is determined by a forward expansion angle 92 and by lateral expansion angles 94. The axis 76 is disposed at a surface angle 95 relative to the exposed surface 70. The forward expansion angle 92 extends from the longitudinal axis 76 in a plane along the axis 76 and normal to the exposed surface 70. The lateral expansion angles 94 extend away from the longitudinal axis 76 to a beginning of a contour of the breakout area 90 in a direction transverse to the longitudinal axis 76 and parallel to the exposed surface 70. The forward expansion angle 92 and the lateral extension angles 94 may be the same angle, or maybe different. In one disclosed embodiment, the forward expansion angle 92 and the lateral expansion angles 94 are between 7° and 14°. In another disclosed example embodiment, the forward expansion angle 92 and the lateral expansion angles 94 are between 8° and 10°. In another example embodiment, the forward expansion angle 92 and the lateral expansion angles 94 are between 10° and 14°. The surface angle 95 is between 15° and 45°. In another example embodiment, the surface angle 95 is between 20° and 35°. In yet another example embodiment, the surface angle 95 is between 25° and 45°.

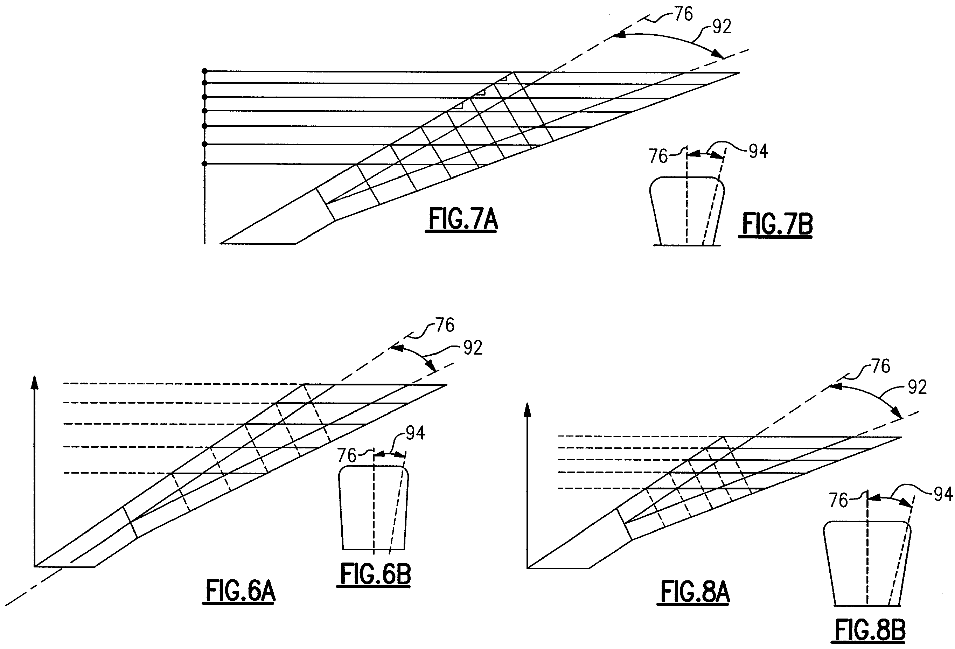

Referring to Figures 6A and 6B, in another disclosed embodiment the forward expansion angle 92 and the lateral expansion angles 94 are 7°.

Referring to Figures 7A and 7B, in another disclosed embodiment the forward expansion angle 92 and the lateral expansion angles 94 are 10°.

Referring to Figures 8A and 8B, in another disclosed embodiment the forward expansion angle 92 and the lateral expansion angle 94 are 12°.

It should be understood that although specific angles are provided by way of the example embodiments of Figures 6A-B, 7A-B and 8A-B, other combination of angles with the range of 7° and 12° are within the contemplation of this disclosure.

The example cooling holes 68 are formed using manufacturing and forming techniques capable of providing the desired geometries and relationships within acceptable tolerances. Moreover, a coating may be applied to the interior and exterior surfaces of the cooling film holes 68. The disclosed relationships and geometries are intended to reflect the completed hole after coating. Accordingly, any forming operation would account for any increased thickness due to the coating such that the final cooling film opening corresponds with the desired and disclosed relationships and geometries.

Referring back to Figures 2, 3, 4 and 5, a blowing ratio is a parameter that relates a mass flow of the main exhaust flow to the cooling airflow through the film cooling holes 68. The blowing ratio (M) is defined by the following equation:

$$M = \frac{\rho_c V_c}{\rho_g V_g}$$

Where $\rho c$ is fluid density of the cooling air flow;
$V_c$ is the velocity of cooling air flow;
$\rho g$ is the fluid density of the mainstream flow; and
$V_g$ is the velocity of the main stream flow.

The blowing ratio M is utilized to understand changes to cooling effectiveness based on the configuration of the cooling hole 68. For a constant blowing ratio M, changes in area will provide different cooling flow effectiveness. The changes in cooling effectiveness are tied to a ratio of the blowing ratio M and the area ratio AR. Accordingly, a relationship between the blowing ratio and the Area Ratio is disclosed as a ratio of M/AR. For a set blowing ratio, changes in area generate improvements in cooling effectiveness. In one disclosed embodiment for the ratio M/AR is maintained between 0.2 and 1.3. In another disclosed embodiment, the ratio M/AR is disposed between 0.5 and 1.0. In yet another disclosed embodiment, the ratio M/AR is between 0.75 and 1.0. This ratio is maintained by configuring the diffuser portion 86 to provide the desired ratio for a given blowing ratio. As appreciated, for different blowing ratios M, the area ratio AR that provides the desired ratio will vary and are within the contemplation of this disclosure.

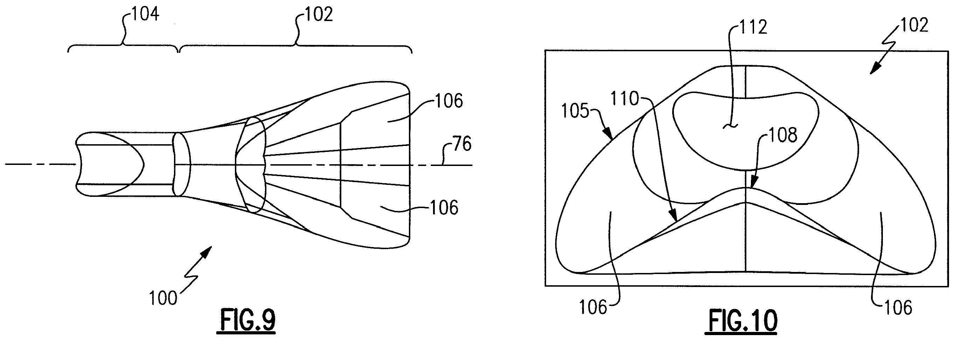

Referring to Figures 9 and 10 another example cooling hole embodiment is indicated at 100 and includes an inlet portion 104 and a two lobed diffuser portion 102 through break out opening 105. The lobes 106 are separated by a center portion 108. The lobes 106 induce a circumferential flow element into the cooling air flow that is injected into the main stream. In this example, a smooth curved transition schematically indicated by line 110 extends from one lobe 106 through the center section and to the second lobe 106. The lobes 106 originate from exit opening 112. The lobes 106 originate at the exit opening 112 to provide a non-round area that induces swirling vortices in the cooling air flow.

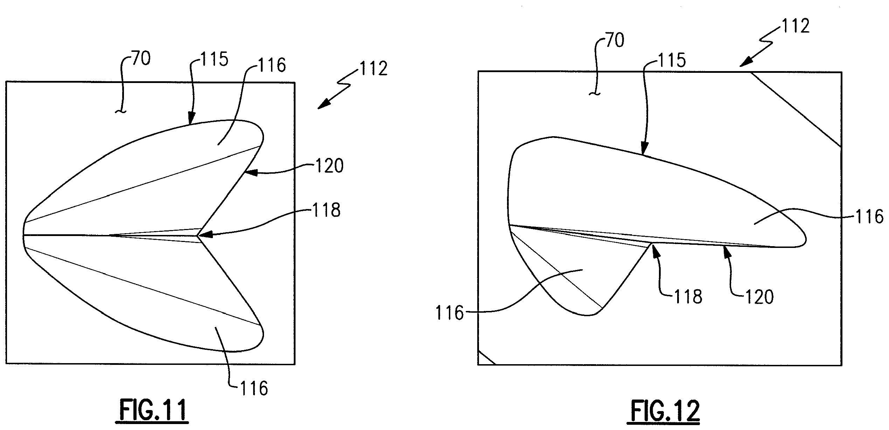

Referring to Figures 11 and 12, another example diffuser portion 112, lobes 116 are separated by a peak 118 at the break out opening 115. The peak 118 is disposed generally along the axis 76 and provides a steep contour 120. The contour 120 extends away from the peak 118 toward each lobe 116. The lobe 116 generates a desired flow pattern for cooling air exiting the diffuser portion 112 on the exposed surface 70.

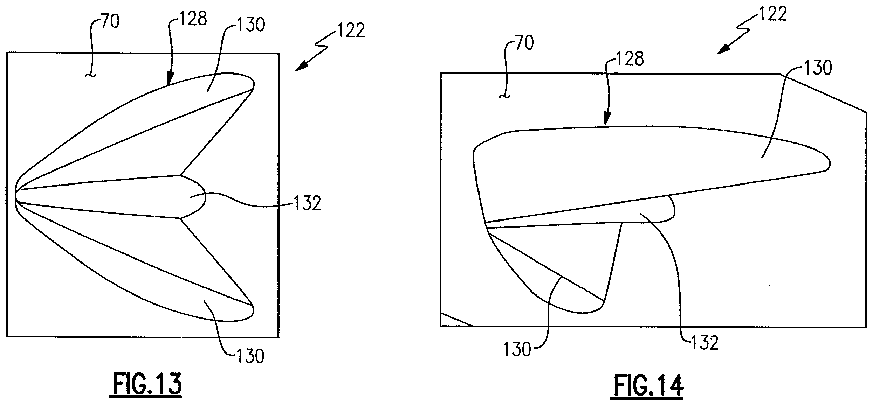

Referring to Figures 13 and 14, another example diffuser portion 122 is schematically shown and includes a breakout opening 128 that includes two lobes 130 separated by a center lobe 132. The center lobe 132 is smaller than the outer two lobes 130. The additional lobe 132 induces different flow patterns between the flow patterns provided by the outer two lobes 130. It should be understood that although several diffuser shapes have been disclosed, other shapes and geometries for the diffuser and break out openings are within the contemplation of this disclosure.

Accordingly, the disclosed cooling film hole embodiments provide geometries and relationships that improve cooling air flow cooling efficiency.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A component (62) of a gas turbine engine comprising:

   a first side (72) and a second side (70); and
   a cooling hole (68) extending through the first side (72) to the second side (70), the cooling hole (68) including an inlet portion (74) disposed about a longitudinal axis (76), the inlet portion (74) defining a cross-sectional inlet area (80) through the first side, and a diffuser portion (86) in communication with the inlet portion (74), the diffuser portion (80) defining a cross-sectional exit area (88) through the second side, wherein an area ratio of the exit area (88) to the inlet area (80) is between 2.5 and 8.

2. The component (62) as recited in claim 1, wherein the diffuser portion (86) includes a forward expansion angle (92) and a lateral expansion angle (94) relative to the axis (76) and each of the forward expansion angle (92) and the lateral expansion angle (94) are between 7° and 14°, optionally wherein each of the forward expansion angle (92) and the lateral expansion angle (94) are the same.

3. The component (62) as recited in claim 1 or 2, wherein the axis (76) is disposed at a surface angle (95) relative to the second side (70) and the surface angle (95) is between 15° and 45°.

4. The component (62) as recited in claim 1, 2 or 3, wherein a ratio of a mass flux ratio between cooling air flow through the cooling hole (68) and a mainstream gas flow defines a blowing ratio and a ratio of the blowing ratio to the area ratio is between 0.2 and 1.3.

5. The component (62) as recited in any preceding claim, wherein the inlet portion (74) includes a meter length (82) and a diameter (84), the meter length (82) being greater than 1.5 times the diameter (84).

6. The component (62) as recited in any preceding claim, wherein the diffuser portion (86) includes a first lobe (106; 116) and a second lobe (106; 116) disposed on either side of the axis (76).

7. The component (62) as recited in claim 6, including a center portion between the first lobe (106; 116) and the second lobe (106; 116), wherein:

   the center portion defines a curved transition between the first lobe and the second lobe; or
   the center portion defines a peak (118).

8. The component (62) as recited in claim 6, including a third lobe (132) between the first lobe (106; 116) and the second lobe (106; 116), optionally wherein the third lobe (132) is smaller than either one of the first lobe (106; 116) and the second lobe (106; 116).

9. A gas turbine engine (20) comprising:

   a compressor section (24) disposed about an engine axis (A);
   a combustor (26) in fluid communication with the compressor section (24);
   a turbine section (28) in fluid communication with the combustor (26); and
   the component (62) of any preceding claim, disposed within the combustor (26) or turbine section (28).

10. A method of fabricating a component (62) of gas turbine engine (20) comprising:

forming a first side (72) and a second side (70); forming a cooling hole (68) extending from the first side (72) to the second side (70) to include an inlet portion (74) disposed about a longitudinal axis (76) and defining an inlet area (80) through the first side (72); and forming a diffuser portion (86) in communication with the inlet portion (74) to define a longitudinal exit area (88) through the second side (70) to provide an area ratio of the exit area (88) to the inlet area (80) between 2.5 and 8.

11. The method as recited in claim 10, including forming the diffuser portion (86) to include a forward expansion angle (92) and a lateral expansion angle (94) relative to the axis (76), wherein each of the forward expansion angle (92) and the lateral expansion angle (94) are between 7° and 14°.

12. The method as recited in claim 10 or 11, including forming the cooling hole (68) such that a ratio of a blowing ratio to the area ratio is between 0.2 and 1.3.

13. The method as recited in claim 10, 11 or 12, including forming the inlet portion (74) to include a meter portion (78) having a diameter (84), with the meter portion (78) having a length (82) greater than 1.5 times the diameter (84).

14. The method as recited in any of claims 10 to 13, including forming the diffuser portion (86) to include a first lobe (106; 116) and a second lobe (106; 116) disposed on either side of the axis (76).

15. The method as recited in claim 14, including forming the diffuser portion (86) to include:

> a center portion between the first lobe (116) and the second lobe (116), wherein the center portion defines a peak (118); or
> a third lobe (132) between the first lobe (116) and the second lobe (116).

FIG.1

FIG.2

**FIG.3**

**FIG.4**

**FIG.5**

EP 4 317 651 A1

FIG.7A

FIG.7B

FIG.8A

FIG.8B

FIG.6A

FIG.6B

FIG.10

FIG.9

**FIG.12**

**FIG.11**

FIG.14

FIG.13

Europäisches
Patentamt

European
Patent Office

Office européen
des brevets

# EUROPEAN SEARCH REPORT

Application Number

**EP 23 21 7337**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 653 983 A (VEHR JAMES W [US]) 31 March 1987 (1987-03-31) | 1-4,9-12 | INV.<br>F01D5/18 |
| Y | * figures 9-11 *<br>* column 8, line 31 * | 6-8,14, 15 | F01D9/02<br>F01D9/06<br>F02K1/82 |
| X | US 7 540 712 B1 (LIANG GEORGE [US]) 2 June 2009 (2009-06-02) | 1,4,5,9, 10,12,13 | F23R3/00 |
| Y | * column 3, line 50 - line 55; figure 6 * | 6-8,14, 15 | |
| X | US 6 287 075 B1 (KERCHER DAVID M [US]) 11 September 2001 (2001-09-11) | 1,3,4,9, 10,12 | |
| Y | * column 4, line 63 *<br>* column 5, line 22 * | 6-8,14, 15 | |
| Y | EP 2 937 513 A2 (UNITED TECHNOLOGIES CORP [US]) 28 October 2015 (2015-10-28)<br>* figures 5A-6C * | 6,7,14 | |
| Y | WO 2013/122906 A1 (UNITED TECHNOLOGIES CORP [US]) 22 August 2013 (2013-08-22)<br>* column 3, line 50 - line 55 * | 6,8,14, 15 | TECHNICAL FIELDS SEARCHED (IPC)<br><br>F01D<br>F02K<br>F23R |

The present search report has been drawn up for all claims

| Place of search | Date of completion of the search | Examiner |
|---|---|---|
| Munich | 20 December 2023 | Raspo, Fabrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

**EP 23 21 7337**

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2023

| Patent document cited in search report | | Publication date | Patent family member(s) | | Publication date |
|---|---|---|---|---|---|
| US 4653983 | A | 31-03-1987 | NONE | | |
| US 7540712 | B1 | 02-06-2009 | NONE | | |
| US 6287075 | B1 | 11-09-2001 | NONE | | |
| EP 2937513 | A2 | 28-10-2015 | EP | 2937513 A2 | 28-10-2015 |
| | | | US | 2016177733 A1 | 23-06-2016 |
| WO 2013122906 | A1 | 22-08-2013 | EP | 2815098 A1 | 24-12-2014 |
| | | | US | 2013205787 A1 | 15-08-2013 |
| | | | WO | 2013122906 A1 | 22-08-2013 |

EPO FORM P0459

For more details about this annex : see Official Journal of the European Patent Office, No. 12/82